# EUROPEAN PATENT SPECIFICATION

(11) **EP 2 463 719 B1**
(45) Date of publication and mention of the grant of the patent: **01.04.2020**
(21) Application number: 11009431.5
(22) Date of filing: 29.11.2011
(51) Int. Cl.: G03G 15/00

(54) **Image processing apparatus, image processing method and storage medium storing program thereof**
Bildverarbeitungsvorrichtung, Bildverarbeitungsverfahren und Speichermedium-Speicherprogramm dafür
Appareil et procédé de traitement d'images et support de stockage contenant le programme correspondant

(30) Priority: 08.12.2010 JP 2010273940; 02.11.2011 JP 2011241528
(43) Date of publication of application: 13.06.2012
(73) Proprietor: Canon Kabushiki Kaisha, Tokyo (JP)
(72) Inventor: Matsuzaki, Masanori, Tokyo (JP)
(74) Representative: WESER & Kollegen Patentanwälte PartmbB

(56) References cited:
- EP-A1- 0 606 962
- EP-A2- 2 063 323
- JP-A- 2007 334 320

## Description

### BACKGROUND OF THE INVENTION

### Field of the Invention

The present invention relates to an image processing apparatus which controls the amount of a color material, a method for controlling the amount discharged in the image processing apparatus, and a storage medium storing a program thereof.

### Description of the Related Art

A color printer that uses a color material such as toner or ink often has a limit in the amount of color material that can be used for each pixel. In, for example, an electrophotographic printer which uses cyan/magenta/yellow/black (to be referred to as C, M, Y, and K, respectively, hereinafter) toners, the limit of the total amount of toner for each pixel is defined as, for example, 300% when the maximum density of each color is 100%. If the total amount of toner for each pixel exceeds 300%, a failure in toner fixing or toner scattering may occur, resulting not only in degradation in image quality but also in damage to the apparatus main body.

To solve the above-mentioned problem, Japanese Patent Laid-Open No. 2007-334320 describes an approach of calculating the total amount of C, M, Y, and K toners for each pixel, and decreasing it if it exceeds a limit value. By increasing K toner instead of decreasing C, M, and Y toners by equal amounts, the total amount of toner can be decreased while minimizing the change in image quality.

A color material having a feature that its discharging amount onto a printing medium varies in each individual color for a density of 100% has come to be used. Alternatively, the discharging amount of a color material having a specific color is often intentionally varied for a density value of 100% to, for example, improve the image quality or save the discharging amount of a color material.

In Japanese Patent Laid-Open No. 2007-334320, the amount of a color material consumed for the same density value is equal in all of the C, M, Y, and K color components. Japanese patent Laid-Open No. 2007-334320 describes a color material amount control method which postulates that the amount of a color material consumed for the same density value is equal in all of the C, M, Y, and K color components. Hence, when the color material amount control method described in Japanese Patent Laid-Open No. 2007-334320 is used for a color material containing C, M, Y, and K color components consumed by different amounts for the same density value, the amount of a color material cannot accurately be controlled.

### SUMMARY OF THE INVENTION

An aspect of the present invention is to eliminate the above-mentioned problems with the conventional technology. The present invention provides an image processing apparatus capable of appropriately controlling the discharging amount of an appropriate color material onto a printing medium in accordance with the property of this color material, a method of controlling the discharging amount in the image processing apparatus, and a storage medium storing a program thereof.

The present invention in its first aspect provides an image processing apparatus as specified in claims 1 to 6.

The present invention in its second aspect provides an image processing method as specified in claims 7 to 9.

The present invention in its third aspect provides a program with computer-executable instructions as specified in claim 10.

According to the present invention, it is possible to appropriately control the discharging amount of an appropriate color material onto a printing medium in accordance with the property of this color material.

Further features of the present invention will become apparent from the following description of exemplary embodiments with reference to the attached drawings.

### BRIEF DESCRIPTION OF THE DRAWINGS

Fig. 1 is a block diagram showing the configuration of a system;
Fig. 2 is a flowchart showing the procedure of the overall processing of converting image data into CMYK image data, including toner total amount control processing;
Fig. 3 is a flowchart showing the procedure of the overall processing of toner total amount control in an embodiment of the present invention;
Figs. 4A and 4B are graphs illustrating an example of LUTs showing the correspondences between the density value and the amount of toner in the embodiment;
Fig. 5 is a flowchart showing the detailed procedure of toner total amount control in the embodiment;
Figs. 6A and 6B are a table and diagram for explaining a case in which the amounts of toners of the respective colors corresponding to a density of 100% are different from each other;
Fig. 7 is a flowchart showing the procedure of the overall processing of toner total amount control in the first embodiment;
Fig. 8 is a flowchart showing the procedure of generation of LUTs used in the first embodiment;
Figs. 9A and 9B are graphs illustrating an example of LUTs used in the first embodiment;
Fig. 10 is a flowchart showing the detailed procedure of toner total amount control in the first embodiment;
Fig. 11 is a flowchart showing the procedure of the overall processing of toner total amount control in the second embodiment;
Fig. 12 is a flowchart showing the procedure of obtaining coefficients used in the second embodiment;
Fig. 13 is a flowchart showing the detailed procedure of toner total amount control in the second embodiment;
Fig. 14 is a flowchart showing the procedure of the overall processing of toner total amount control in the third embodiment; and
Fig. 15 is a flowchart showing the procedure of the overall processing of toner total amount control in the fourth embodiment.

### DESCRIPTION OF THE EMBODIMENTS

Preferred embodiments of the present invention will now be described hereinafter in detail, with reference to the accompanying drawings. It is to be understood that the following embodiments are not intended to limit the claims of the present invention, and that not all of the combinations of the aspects that are described according to the following embodiments are necessarily required with respect to the means to solve the problems according to the present invention. Note that the same reference numerals denote the same constituent elements, and a description thereof will not be given.

### <First Embodiment>

A method of limiting the amount of toner when the discharging amount (application amount) of a color material (toner) consumed for the same density value varies in each individual color in an embodiment of the present invention will be described below.

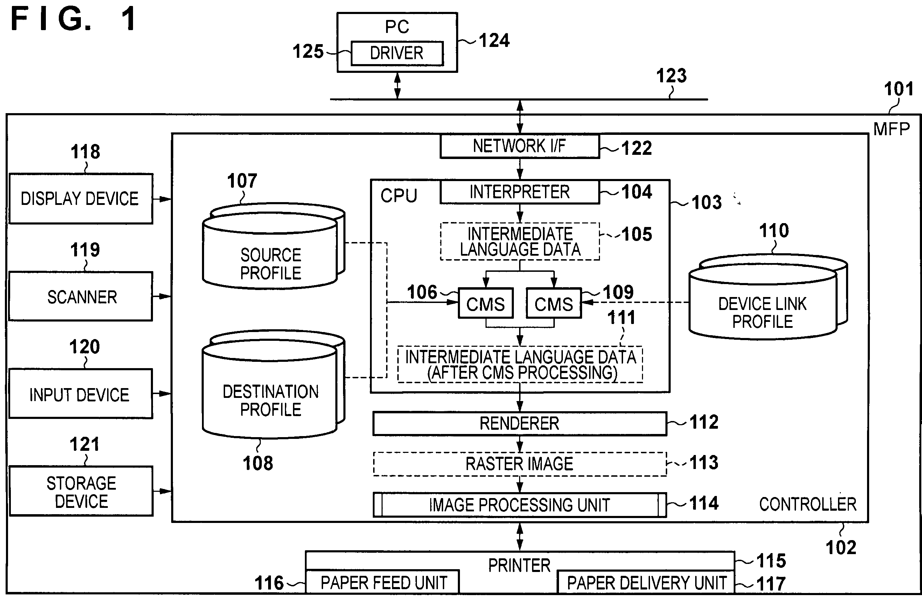

Fig. 1 is a block diagram showing the configuration of a system in an embodiment according to the present invention. An MFP 101 which uses C, M, Y, and K toners is connected to a network 123. Also, a PC 124 is connected to the MFP 101 via the network 123. A driver 125 in the PC 124 transmits image data to be printed to the MFP 101.

The MFP 101 will be described in detail hereinafter. A network I/F 122 receives, for example, image data and transmits, for example, a raster image and control data (both will be described later). A controller 102 includes a CPU 103, renderer 112, and image processing unit 114. An interpreter 104 of the CPU 103 interprets the PDL portion of the received image data to generate intermediate language data 105. A CMS 106 performs color conversion using a source profile 107 and a destination profile 108 to generate intermediate language data (after CMS processing) 111.

At this time, the CMS (Color Management System) performs color conversion using profile information for color conversion. In this embodiment, a standardized profile such as an ICC profile specified by the ICC (International Color Consortium) is used. Also, the source profile 107 is a profile used to convert a device-dependent color space such as an RGB or CMYK color space into a device-independent color space such as an L*a*b* or XYZ color space. Like the L*a*b* color space, the XYZ color space is a device-independent color space and represents colors using three stimulus values.

Also, the destination profile 108 is a profile used to convert a device-independent color space into a CMYK color space that depends on a device (printer 115). On the other hand, a CMS 109 performs color conversion using a device link profile 110 to generate the intermediate language data (after CMS processing) 111. Note that the device link profile 110 is a profile used to directly convert a device-dependent color space such as an RGB or CMYK color space into a CMYK color space that depends on the device (printer 115). The CMS 106 or 109 is selected depending on the setting of the driver 125. Although CMSs are selectively used in accordance with the type of profile in this embodiment, one CMS may process a plurality of types of profiles. Also, the types of profiles are not limited to the example given in this embodiment, and any type of profile may be adopted as long as a device-dependent CMYK color space that depends on the printer 115 is employed.

The renderer 112 creates a raster image 113 from the intermediate language data (after CMS processing) 111. The image processing unit 114 processes the raster image 113 or an image read by a scanner 119. The printer 115 connected to the controller 102 is a printer which prints on a printing medium such as paper based on output data using chromatic colors such as cyan (C), magenta (M), and yellow (Y) and an achromatic color such as black (Bk). The printer 115 includes a paper feed unit 116 which feeds paper, and a paper delivery unit 117 which delivers the paper printed based on output data. A display device 118 displays a UI which indicates an instruction to the user and the state of the MFP 101. The scanner 119 is a scanner including an auto document feeder. The scanner 119 irradiates a bundle of document images or a single document image using a light source (not shown), and forms an image reflected by the document on a solid-state image sensor such as a CCD sensor using a lens, thereby obtaining a raster image read signal as image data. An input device 120 is an interface used to accept input from the user. A storage device 121 stores, for example, data processed by the controller 102, and data received by the controller 102.

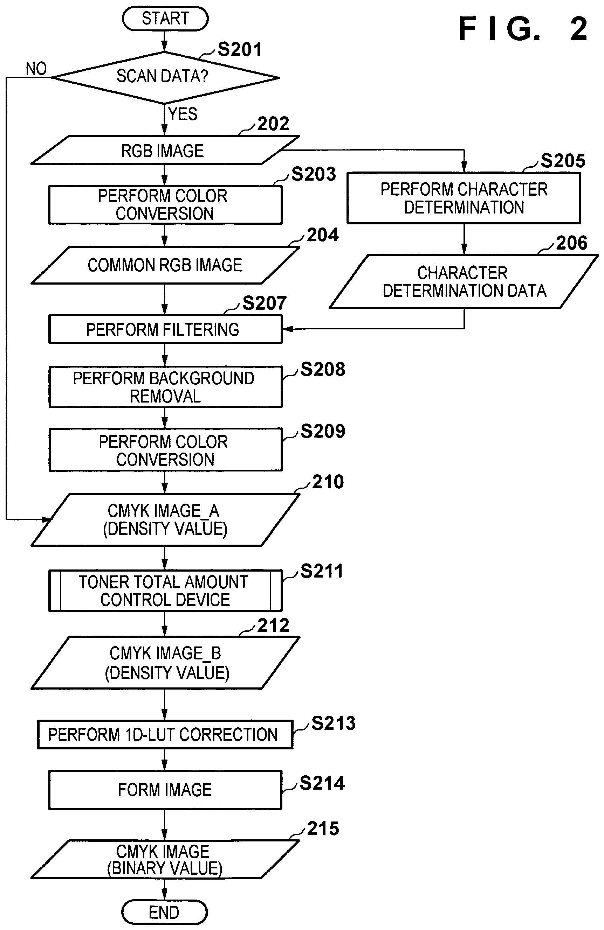

Fig. 2 is a flowchart showing the procedure of the processing of the image processing unit 114. After receiving image data, the image processing unit 114 determines in step S201 whether the received data is scan data received from the scanner 119 or the raster image 113 sent from the driver 125. If the image processing unit 114 determines in step S201 that the received data is not the scan data (this data is the raster image 113 sent from the driver 125), this data represents a CMYK image_A (density value) 210 obtained by conversion into a printer device-dependent CMYK color space by the CMS. On the other hand, if the image processing unit 114 determines in step S201 that the received data is the scan data, this data represents an RGB image 202, so the image processing unit 114 performs color conversion processing to create a common RGB image 204 in step S203.

Note that the common RGB image 204 is defined in a device-dependent RGB color space, and can be converted into a device-independent color space such as an L*a*b* color space by an arithmetic operation. In this case, any color space such as an L*a*b* color space may be adopted as long as it serves as a device-independent color space. On the other hand, in step S205, the image processing unit 114 performs character determination processing to generate character determination data 206. In this case, an image edge, for example, is detected to generate the character determination data 206. In step S207, the image processing unit 114 performs filter processing for the common RGB image 204. In this case, different types of filter processing are performed in the character portion and the remaining portion using the character determination data 206. The image processing unit 114 performs background removal processing to remove the background in the scanned document in step S208, and performs color conversion processing in step S209 to create the CMYK image_A (density value) 210 (an example of color material data). The density value mentioned herein is obtained by representing the value of each of C, M, Y, and K densities using a signal value of 0% to 100%. A signal value defined by the number of bits may be used instead of using percent as its unit, as a matter of course. For example, a signal value of 0 to 255 is defined in case of 8 bits.

In step S211, the image processing unit 114 performs toner total amount control processing to output a CMYK image_B (density value) 212. In this embodiment, toner total amount control processing which can control even if the amount of a color material such as toner consumed for the same density value varies in each individual color is performed. This processing will be described in detail later. After performing the toner total amount control processing in step S211, the image processing unit 114 corrects the gradation characteristics of the respective colors: C, M, Y, and K in step S213. Lastly, in step S214, the image processing unit 114 performs image forming processing to create a CMYK image (binary value) 215, and transmits image data to the printer 115.

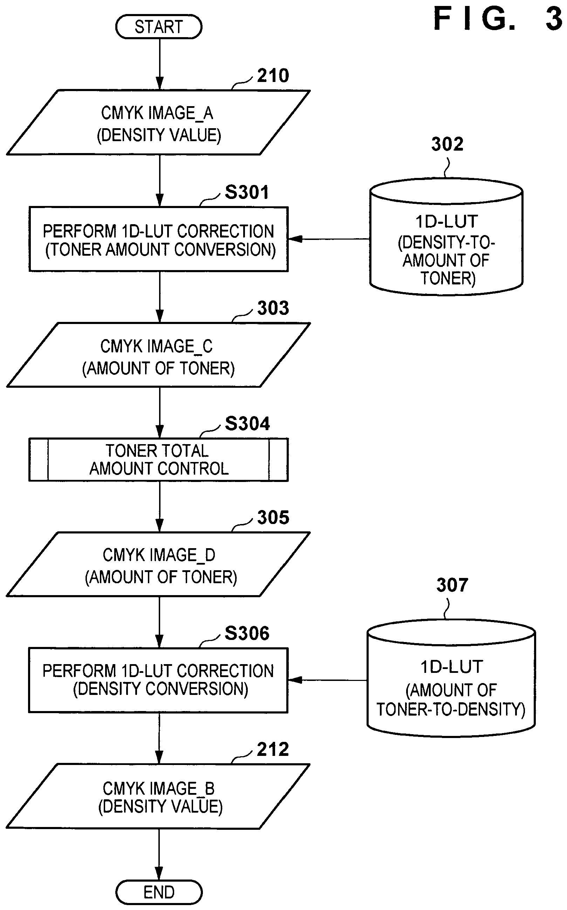

The toner total amount control processing in step S211 will be described in detail next with reference to Fig. 3. Fig. 3 is a flowchart showing the sequence of toner total amount control processing when the amount of toner consumed for a density value of 100% is equal in all the colors: C, M, Y, and K. First, in step S301, the image processing unit 114 performs 1D-LUT correction (toner amount conversion) using a 1D-LUT (density-to-amount of toner) 302 to convert the CMYK image_A (density value) 210 into a CMYK image_C (amount of toner) 303.

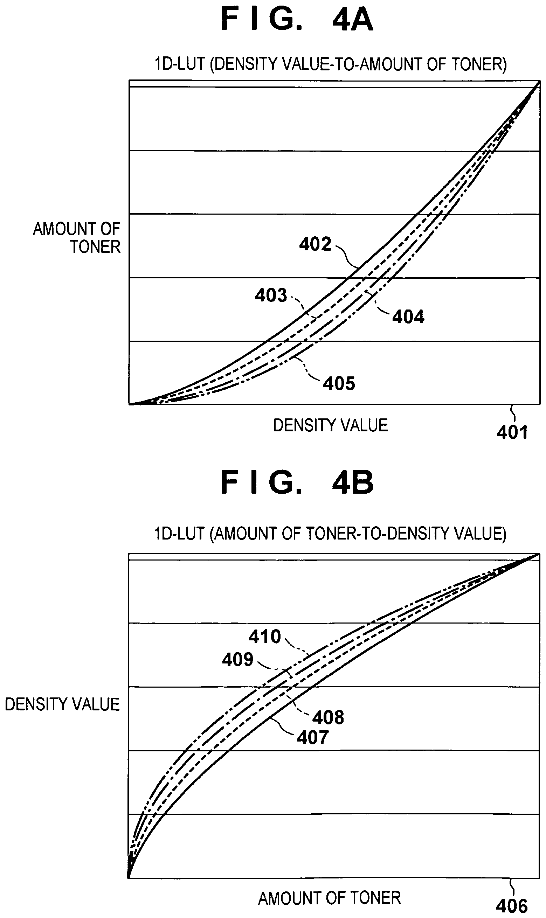

The 1D-LUT (density-to-amount of toner) 302 will be described with reference to Fig. 4A. A graph 401 shows the amount of toner consumed for each pixel. Although the amount of toner should normally be represented by the weight (gram), it is represented by a signal value of 0% to 100% in this case, like the density value. Data 402 represents C, data 403 represents M, data 404 represents Y, and data 405 represents Bk, and the individual colors may have different characteristics. The individual colors may have different characteristics because the amount of toner consumed to represent the same density value changes with a change in color (type) of toner. In most cases, this tendency is rarely observed when the density value is 100%, but becomes more conspicuous as the density value comes closer to 0%.

In step S304, the image processing unit 114 performs toner total amount control to output a CMYK image_D (amount of toner) 305.

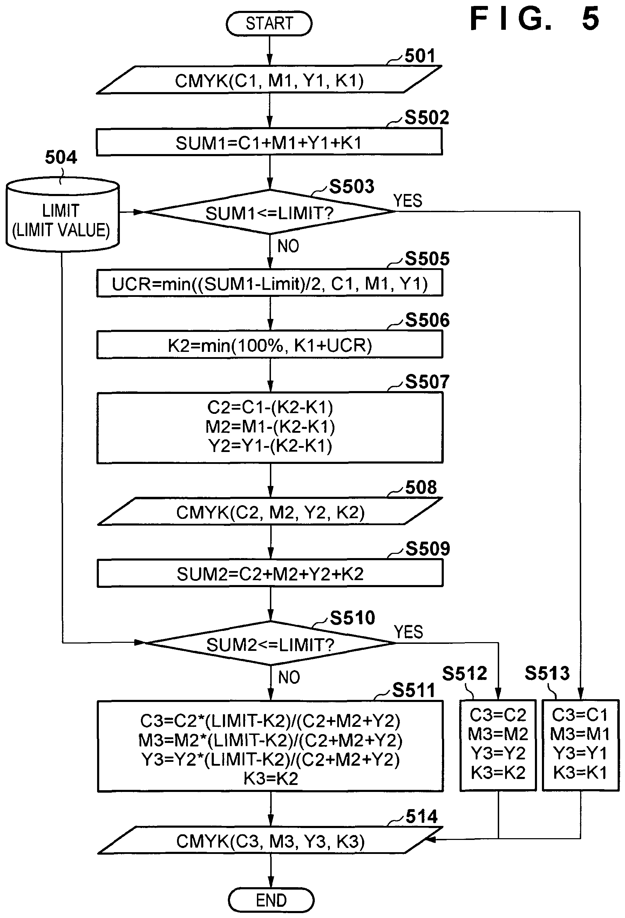

The toner total amount control in step S304 will be described herein with reference to Fig. 5. The sequence of the processing shown in Fig. 5 is executed for each pixel. In step S502, the image processing unit 114 acquires a sum value SUM1 (total discharging amount) for CMYK(C1,M1,Y1,Bk1) 501 input in the toner total amount control processing in step S304 (an example of second acquisition). The CMYK(C1,M1,Y1,Bk1) 501 is data of the CMYK image_C (amount of toner) 303 for each pixel.

In step S503, the image processing unit 114 reads a LIMIT (limit value) 504, and compares it with the sum value SUM1. The LIMIT (limit value) 504 means herein the limit value of the amount of fixable toner, and is defined by a numerical value such as "300%". When toner larger in an amount than the LIMIT (limit value) 504 is to be fixed, the quality of the output image may degrade or the printer 115 may suffer damage, so the final total amount of toner must be set equal to or smaller than the LIMIT (limit value) 504.

If the image processing unit 114 determines in step S503 that the sum value SUM1 is equal to or smaller than the LIMIT (limit value) 504 (that is, equal to or smaller than a specific threshold), it decides the CMYK(C1,M1,Y1,Bk1) 501 as CMYK(C3,M3,Y3,K3) 514 and outputs it in step S513. This shows an example of second decision. The CMYK(C3,M3,Y3,K3) 514 is data of the CMYK image_D (amount of toner) 305 for each pixel. On the other hand, if the image processing unit 114 determines in step S503 that the sum value SUM1 is larger than the LIMIT (limit value) 504, it calculates a UCR value using an equation presented in step S505.

The UCR value means herein a value which influences the decrement value of each of the C, M, and Y toners, and the increment value of the K toner. In the toner total amount control processing of step S304, to minimize the decrement value of the amount of toner, a half of the amount by which the limit value is exceeded or a minimum value among C1, M1, and Y1, is set as the UCR value. In step S506, the image processing unit 114 calculates a value K2 among values C2, M2, Y2, and K2 after first toner total amount limitation. A value obtained by adding the UCR value to K1 is basically used as K2, but a value that exceeds 100% cannot be set to K2 alone, so a value of 100% is set to K2 if 100% is exceeded.

In step S507, the image processing unit 114 decreases the values C1, M1, and Y1 to calculate the values C2, M2, and Y2. In this case, the difference between the value K1 and the value K2 calculated in step S506 is set as the decrement value. With the above-mentioned processing sequence, CMYK(C2,M2,Y2,K2) 508 is calculated by decreasing the total amount of toner.

In step S509, the image processing unit 114 sums up C2, M2, Y2, and K2 to calculate SUM2. In step S510, the image processing unit 114 reads the LIMIT (limit value) 504, and compares it with SUM2.

If SUM2 is equal to or smaller than the LIMIT (limit value) 504, the image processing unit 114 decides the CMYK(C2,M2,Y2,K2) 508 as CMYK(C3,M3,Y3,K3) 514 and outputs it in step S512 (an example of first decision). On the other hand, if SUM2 is larger than the LIMIT (limit value) 504, in step S511 the image processing unit 114 directly sets the value K2 as K3, and calculates a coefficient from a value obtained by subtracting K2 from the LIMIT (limit value) 504, and the sum value of C2, M2, and Y2. The image processing unit 114 then multiplies C2, M2, and Y2 by the calculated coefficient, and outputs the CMYK(C3,M3,Y3,K3) 514.

In the above-mentioned way, after performing the toner total amount control in step S304 to calculate the CMYK image_D (amount of toner) 305, the image processing unit 114 calculates the CMYK image_B (density value) 212 using a 1D-LUT (amount of toner-to-density) 307 in step S306.

The 1D-LUT (amount of toner-to-density) 307 will be described with reference to Fig. 4B. A graph 406 shows the density value as a function of the amount of toner consumed for each pixel. The graph 406 is obtained by inverse calculation of the graph 401. Data 407 represents C, data 408 represents M, data 409 represents Y, and data 410 represents K. If the individual colors have different characteristics in the graph 401, the same holds true for the graph 406.

The procedure of toner total amount control processing when the amount of toner consumed for a density value of 100% varies in the individual colors: C, M, Y, and K will be described next. Fig. 3 assumes that the amount of toner consumed for a density value of 100% is equal in all the colors: C, M, Y, and K. However, a situation in which the output density of a specific color alone is to be made higher may be encountered in practice. In this case, since the amount of toner of a specific color to be made denser increases, the amount of consumed toner varies in each individual color despite the same density value. Also, the amount of a color material used may vary in each individual color despite the same density value, depending on the components of the color material.

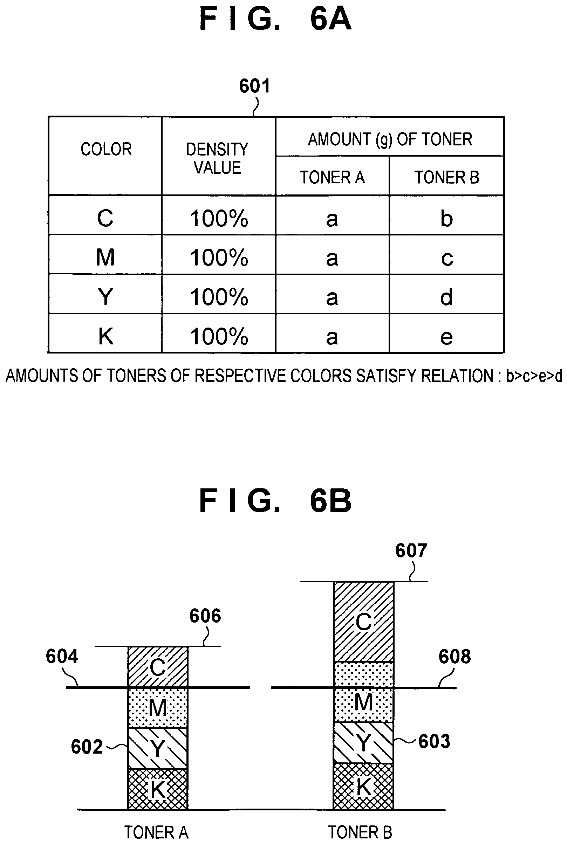

The above-mentioned situation will be described in more detail with reference to Figs. 6A and 6B. A table 601 indicates the amount of toner consumed for a density value of 100% in a specific area for each color. The amount (g) of toner A for a density value of 100% is "a" for all of the C, M, Y, and K color components. In contrast to this, the amount of toner B for a density value of 100% varies in each individual color. In case of the table 601, the amount of toner is "b" for C, "c" for M, "d" for Y, and "e" for K. Assuming herein that the amounts of toners of the respective colors satisfy a relation: b > c > e > d, the amount of toner consumed for a density value of 100% decreases in the order of C, M, K, and Y. As shown in Fig. 6B, an amount of toner 602 is the sum of the amounts of toners consumed for a density value of 100% in toner A, and an amount of toner 603 is the sum of the amounts of toners consumed for a density value of 100% in toner B. An amount of toner 606 is the amount of toner consumed for the sum of the density values of C, M, Y, and K in toner A, that is, 400%, and an amount of toner 607 is the amount of toner consumed for the sum of the density values of C, M, Y, and K in toner B, that is, 400%. An amount of toner 604 indicates a limit value of "300%" in toner A, and the sum value of M, Y, and K corresponds to this limit value in toner A. In other words, after the density values are converted into the amounts of toners using the graph 401, the sum value and the limit value can be compared with each other.

An amount of toner 608 indicates a limit value of "300%" in toner B. In this case, "300%" is defined with reference to K. However, in case of toner B, the amount of toner varies in each individual color, so the sum value of M, Y, and K exceeds the limit value, that is, the amount of toner 608. In other words, after the density values are converted into the amounts of toners using the graph 401, the sum value and the limit values cannot be compared with each other. In this embodiment, toner total amount control processing is possible even in the above-mentioned situation.

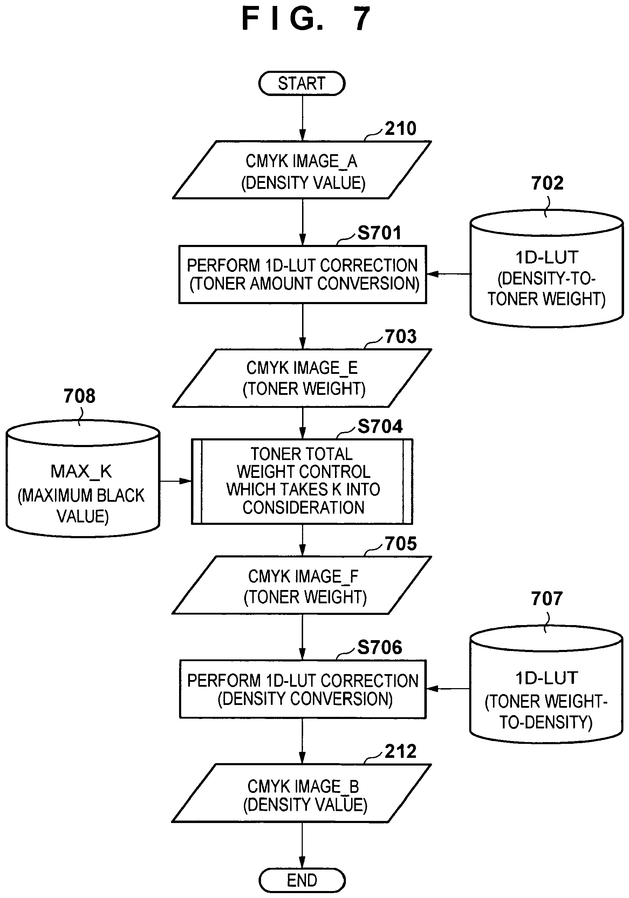

The procedure of discharging amount control processing in this embodiment will be described next with reference to Fig. 7, in correspondence with the processing shown in Fig. 3. First, in step S701, the image processing unit 114 performs 1D-lUT correction (toner amount conversion) to convert the CMYK image_A (density value) 210 into a CMYK image_E (toner weight) 703. The "toner weight" will be described later. In this case, a 1D-LUT (density-to-toner weight) 702 is used, unlike the case shown in Fig. 3.

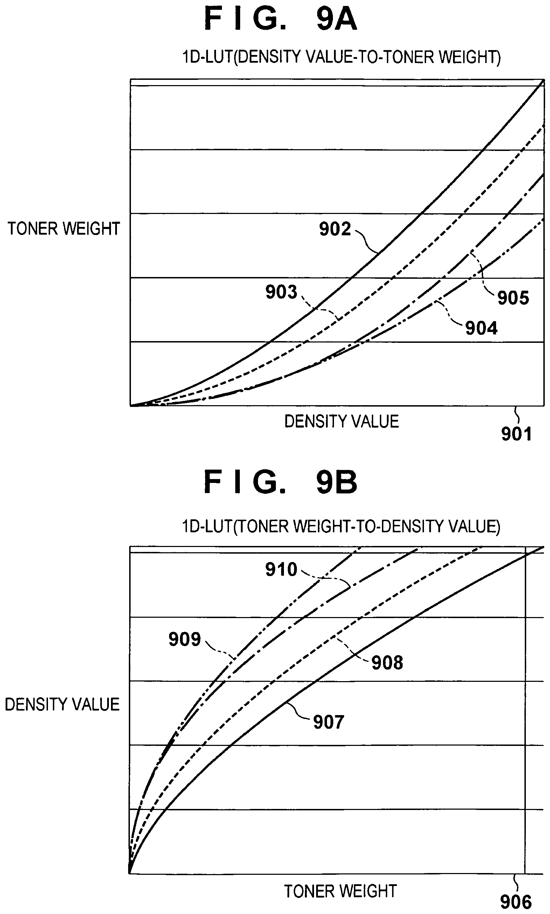

The 1D-LUT (density-to-toner weight) 702 will be described with reference to Fig. 9A. A graph 901 shows the amount of toner consumed for the density value of each pixel. Fig. 4A shows the amount of toner consumed for each pixel. Although the amount of toner should normally be represented by the weight (gram), it is represented by a signal value of 0% to 100% in this case, like the density value. Data 902 represents C, data 903 represents M, data 904 represents Y, and data 905 represents K. Since the graph 901 reflects the relationship of toner B in the table 601, the amount of toner consumed for a density value of 100% varies in each individual color. In this manner, the amount of toner reflecting the relationship of the amount of toner consumed, which varies in each individual color for the same density value, that is, the relationship of the "weight" of toner, which varies in each individual color for the same density value, is defined as a "toner weight" in this specification. An arithmetic method for generating the 1D-LUT (density-to-toner weight) 702 will be described later.

In step S704, the image processing unit 114 performs toner total weight control in consideration of K using MAX_K (maximum black value) 708 to convert the CMYK image_E (toner weight) 703 into a CMYK image_F (toner weight) 705. The MAX_K (maximum black value) 708 and the toner total weight control which takes K into consideration in step S704 will be described later.

Lastly, in step S706, the image processing unit 114 performs 1D-LUT correction (density conversion) using a 1D-LUT (toner weight-to-density) 707 to calculate the CMYK image_B (density value) 212.

The 1D-LUT (toner weight-to-density) 707 will be described with reference to Fig. 9B. A graph 906 shows the density value as a function of the amount of toner consumed for each pixel (after an arithmetic operation). Although the graph 906 is obtained by inverse calculation of the graph 901, a detailed description thereof will be given later. Data 907 represents C, data 908 represents M, data 909 represents Y, and data 910 represents K. In the graph 901, the toner weights of M, Y, and K for a density value of 100% are lower than 100%, so the density values of M, Y, and K in the graph 906 become 100% before the toner weights of the corresponding colors reach 100%.

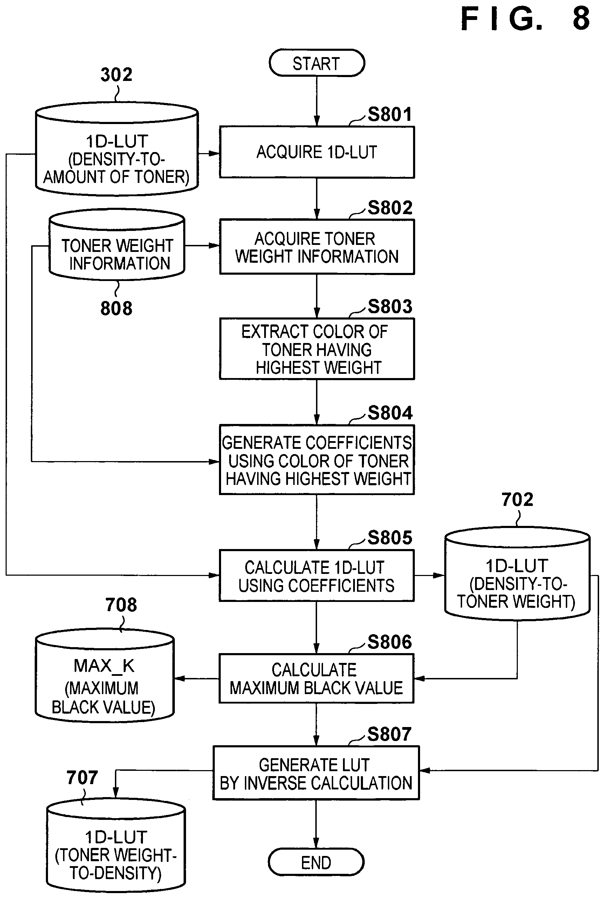

A method of calculating the 1D-LUT (density-to-toner weight) 702 and the 1D-LUT (toner weight-to-density) 707 will be described next with reference to Fig. 8. First, in step S801, the image processing unit 114 acquires the 1D-LUT (density-to-amount of toner) 302. A 1D-LUT which associates the density value and the amount of toner with each other is generated for each color, and therefore has an amount of toner of 100% for a density value of 100%, as in the graph 401 shown in Fig. 4A. In step S802, the image processing unit 114 acquires toner weight information 808.

The toner weight information 808 is information indicating, for example, the amount (g) of toner consumed for a density value of 100%, and the amount (g) of toner varies in each individual color. In this case, "Toner B" in the table 601 shown in Fig. 6A corresponds to the toner weight information 808. In step S803, the image processing unit 114 extracts the color of toner having a highest weight. Since the amount of toner changes in the order of b > c > e > d in the example shown in the table 601, b is the color of toner having a highest weight.

In step S804, the image processing unit 114 generates coefficients using the toner weight information 808, and the color of toner having a highest weight. In case of the table 601, the coefficient of C is "b/b = 1", the coefficient of M is "c/b", the coefficient of Y is "d/b", and the coefficient of K is "e/b". Although the coefficient of the color of toner having a highest weight is set to 1, it may have a value smaller than 1. In step S805, the image processing unit 114 calculates the 1D-LUT (density-to-toner weight) 702 using the 1D-LUT (density-to-amount of toner) 302 and the coefficients.

In step S806, the image processing unit 114 acquires the MAX_K (maximum black value) 708 by focusing attention on K of the 1D-LUT (density-to-toner weight) 702 (an example of first acquisition). In case of, for example, the graph 901 shown in Fig. 9A, the toner weight for a density value of 100% is determined as the MAX_K (maximum black value) 708 by focusing attention on the data 905 corresponding to K. Lastly, in step S807, the image processing unit 114 performs inverse calculation of the 1D-LUT (density-to-toner weight) 702 to calculate the 1D-LUT (toner weight-to-density) 707.

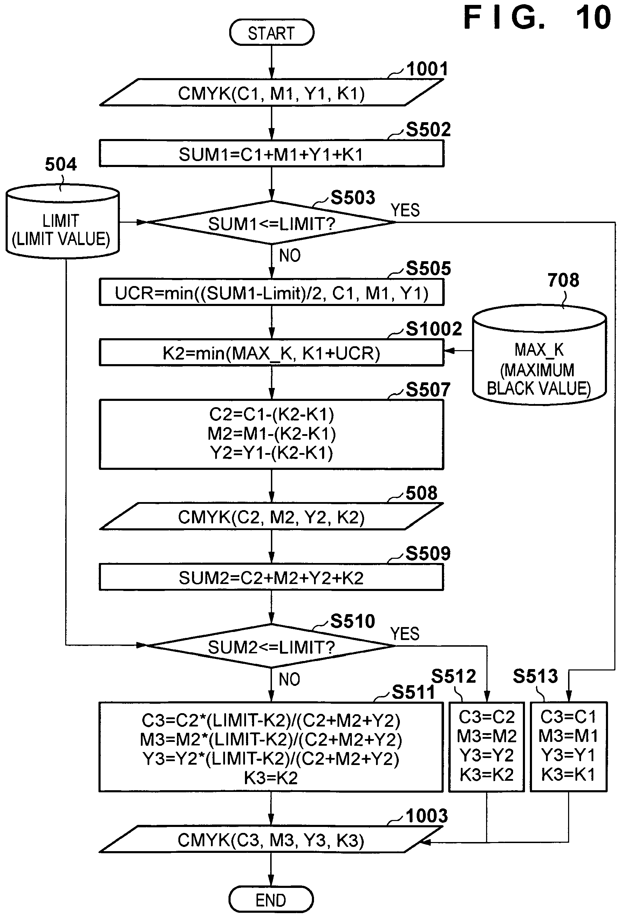

The toner total weight control which takes K into consideration in step S704 will be described next with reference to Fig. 10. CMYK(C1,M1,Y1,K1) 1001 in step S1001 is data of the CMYK image_E (toner weight) 703 for each pixel. Also, CMYK(C3,M3,Y3,K3) 1003 is data of the CMYK image_F (toner weight) 705 for each pixel. Features other than the process in step S1002 and the MAX_K (maximum black value) 708 are the same as in Fig. 5, and a description thereof will not be given.

In step S1002, the image processing unit 114 compares the MAX_K (maximum black value) 708 and the value obtained by adding K1 to the UCR value calculated in the previous step S505, and calculates the smaller one of them as K2.

The reason why K2 is obtained using the MAX_K (maximum black value) 708 will be described herein. When K is represented by the data 905 shown in Fig. 9A, the weight of toner consumed for a density value of 100% is about 70%. In other words, the MAX_K (maximum black value) 708 is about 70%. In performing 1D-LUT correction (density conversion) in step S706, the data 910 obtained by inverse calculation of the data 905 is used, so the density value becomes 100% when the toner weight reaches only about 70%. In other words, the same density value is obtained regardless of whether the toner weight is 70% or 100%. In this case, if the process in step S506 of Fig. 5A is executed, a small value is taken to fall within the range of the value of K1+UCR and a value of 100%, so the value K2 becomes 100% if K1+UCR exceeds 100%. Hence, in the next step S507, C1, M1, and Y1 are decreased by an amount of "100%-K1" (that is, the amount of increase in discharging amount for black).

In contrast to this, as in step S1002, if a small value is taken to fall within the range of the value of K1+UCR and the value of the MAX_K (maximum black value) 708, the MAX_K (maximum black value) 708, that is, 70% is selected if K1+UCR exceeds 70%. Hence, in the next step S507, C1, M1, and Y1 are decreased by an amount of "70%-K1". In other words, the density value after correction in step S706 is the same regardless of whether K2 is 70% or 100%, but nonetheless C1, M1, and Y1 are decreased too much by an amount of "100%-70% = 30%" in step S506. For this reason, K2 is obtained using the MAX_K (maximum black value) 708. In other words, in this embodiment, the discharging amount of black is decided so that it becomes equal to or smaller than a discharging amount corresponding to a density of 100% regardless of whether the color material exhibits the characteristics shown in Figs. 4A and 4B or 9A and 9B (regardless of whether the discharging amount corresponding to a density of 100% varies in each individual color).

As described above, in this embodiment, the concept "toner weight" is introduced to allow conventionally difficult toner total amount control processing which copes with a situation in which the amount of toner consumed for a density value of 100% varies in each individual color. Although the color material is limited to toner in this embodiment, any color material may be adopted. Also, although the table 601 has been taken as an example of the toner weight information 808, the toner weight information 808 may take any form. Moreover, although a 1D-LUT is used to convert the density value into the amount of toner (after an arithmetic operation) in this embodiment, conversion may be performed by an arithmetic operation defined by a specific equation. Similarly, although a 1D-LUT is used to convert the amount of toner (after an arithmetic operation) into the density value in this embodiment, conversion may be performed by an arithmetic operation defined by a specific equation. Again, although the difference in amount of a color material consumed for a density value of 100% among the individual colors is defined by the concept "toner weight" in this embodiment, any concept may be employed as long as it can represent this difference. According to this embodiment, the amount of a color material can precisely be limited even if the amount of a color material such as toner consumed for the same density value varies in each individual color.

### <Second Embodiment>

An embodiment when toner amount information is used in toner total amount control will be described next. Processing of performing toner total weight control which takes K into consideration using a 1D-LUT which reflects toner weight information has been described in the first embodiment. A case in which a 1D-LUT which reflects no toner weight information will be exemplified in the second embodiment.

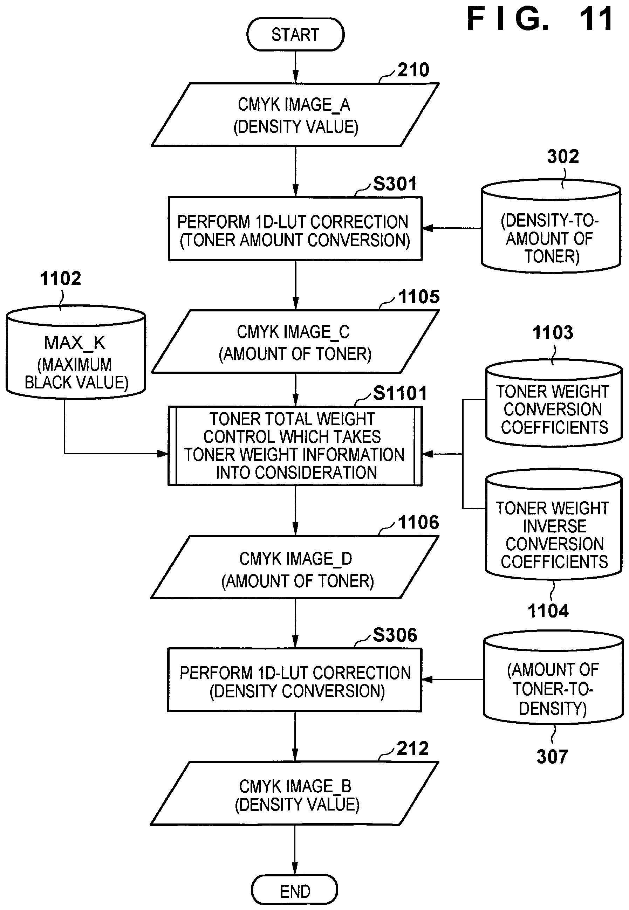

Fig. 11 is a flowchart showing the processing procedure in this embodiment. As in Fig. 3, in step S301, an image processing unit 114 creates a CMYK image_C (amount of toner) 1105 from a CMYK image_A (density value) 210 using a 1D-LUT (density-to-amount of toner) 302. Also, after toner total weight control, in step S306, the image processing unit 114 creates a CMYK image_B (density value) 212 from a CMYK image_D (amount of toner) 1106 using a 1D-LUT (amount of toner-to-density) 307.

Step S1101 is a process executed in this embodiment. In step S1101, the image processing unit 114 performs toner total weight control which takes toner weight information into consideration to convert the CMYK image_C (amount of toner) 1105 into the CMYK image_D (amount of toner) 1106. At this time, the image processing unit 114 uses MAX_K (maximum black value) 1102, toner weight conversion coefficients 1103, and toner weight inverse conversion coefficients 1104.

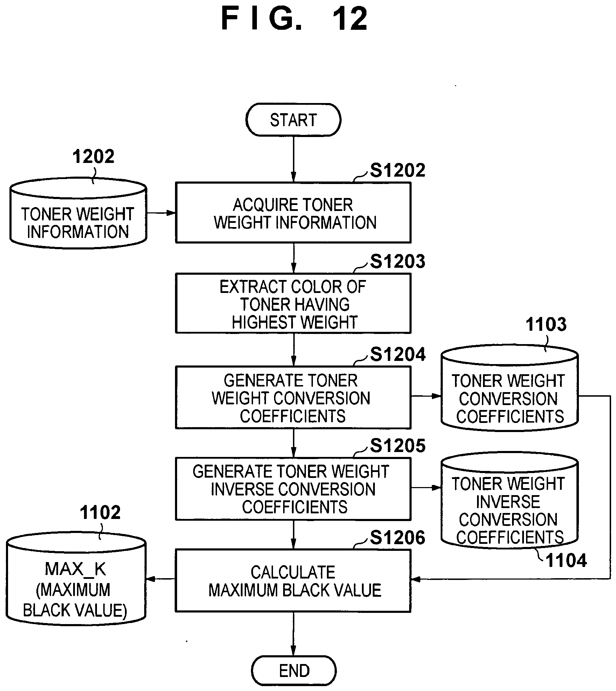

A method of calculating the MAX_K (maximum black value) 1102, the toner weight conversion coefficients 1103, and the toner weight inverse conversion coefficients 1104 will be described with reference to Fig. 12. First, in step S1201, the image processing unit 114 acquires toner weight information 1202. Information of toner B in a table 601, for example, is used as the toner weight information 1202. In step S1203, the image processing unit 114 extracts the color of toner having a highest weight. In the example shown in the table 601, "b" corresponding to C is selected. In step S1204, the image processing unit 114 generates the toner weight conversion coefficients 1103 using the color of toner having a highest weight. In the example shown in the table 601, the coefficients corresponding to C, M, Y, and K are "b/b = 1", "c/b", "d/b", and "e/b", respectively. Furthermore, in step S1205, the image processing unit 114 generates the toner weight inverse conversion coefficients 1104. In the example shown in the table 601, the coefficients corresponding to C, M, Y, and K are "b/b = 1", "b/c", "b/d", and "b/e", respectively. Lastly, in step S1206, the image processing unit 114 calculates the MAX_K (maximum black value) 1102 using the toner weight conversion coefficients 1103. In the example shown in the table 601, a value obtained by multiplying 100% by the toner weight conversion coefficient of K, that is, "e/b" corresponds to the MAX_K (maximum black value) 1102.

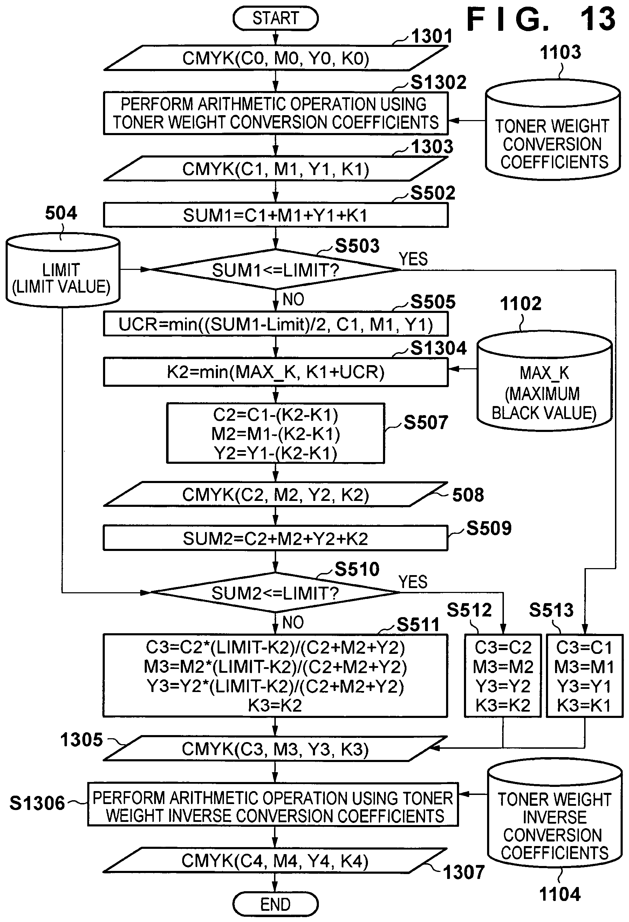

The toner total weight control in step S1101 will be descried with reference to Fig. 13. CMYK(C0,M0,Y0,K0) 1301 is data of the CMYK image_C (amount of toner) 1105, shown in Fig. 11, for each pixel. Also, CMYK(C4,M4,Y4,K4) 1307 is data of the CMYK image_D (amount of toner) 1106, shown in Fig. 11, for each pixel.

First, in step S1302, the image processing unit 114 performs an arithmetic operation using the toner weight conversion coefficients 1103 to convert the CMYK(C0,M0,Y0,K0) 1301 into CMYK(C1,M1,Y1,K1) 1303. Also, in step S1304, the image processing unit 114 calculates the value K2 using the MAX_K (maximum black value) 1102. Details of step S1304 are the same as those of step S1002 in Fig. 10, and a description thereof will not be given. Also, the processes in steps S502 to S513 shown in Fig. 13 are the same as those shown in Fig. 5, and a description thereof will not be given.

In step S1306, the image processing unit 114 performs an arithmetic operation using the toner weight inverse conversion coefficients 1104 to convert the CMYK(C3,M3,Y3,K3) calculated in the processes up to step S513 into the CMYK(C4,M4,Y4,K4) 1307, and the processing ends. In this manner, conversion into the "toner weight" is performed in an arithmetic operation for total amount control, thereby making it possible to minimize the amount of arithmetic operation using the "toner weight".

Although the color material is limited to toner in this embodiment, any color material may be adopted. Also, although the table 601 has been taken as an example of the toner weight information 1202 in this embodiment, the toner weight information 1202 may take any form. Moreover, although a 1D-LUT is used to convert the density value into the amount of toner in this embodiment, conversion may be performed by an arithmetic operation defined by a specific equation. Similarly, although a 1D-LUT is used to convert the amount of toner into the density value in this embodiment, conversion may be performed by an arithmetic operation defined by a specific equation. Again, although the difference in amount of a color material consumed for a density value of 100% among the individual colors is defined by the concept "toner weight" in this embodiment, any concept such as the "volume" may be employed as long as it can represent this difference.

According to this embodiment, the amount of a color material can precisely be limited even if the amount of a color material such as toner consumed for the same density value varies in each individual color. Also, reading and processing coefficients in toner total weight control processing obviates the need to generate a 1D-LUT in advance, thus making it possible to minimize the amount of correction when the toner weight information is changed.

### <Third Embodiment>

An embodiment when medium-specific information is used in toner total weight control will be described next. Processing of reflecting toner weight information on a 1D-LUT and toner total weight control has been described in the first and second embodiments. A case in which individual media have different toner weight characteristics and color-specific relationships will be exemplified in the third embodiment.

In, for example, an electrophotographic printer, the amount of fixable toner may change depending on the basis weight of the medium used. In this case, the amount of toner consumed for a density value of 100% in each color changes, so a plurality of pieces of toner weight information are present. In this embodiment, a plurality of data such as a plurality of 1D-LUTs are prepared in correspondence with different media, and switched in accordance with the information of the medium used, thereby performing processing corresponding to a plurality of pieces of toner weight information.

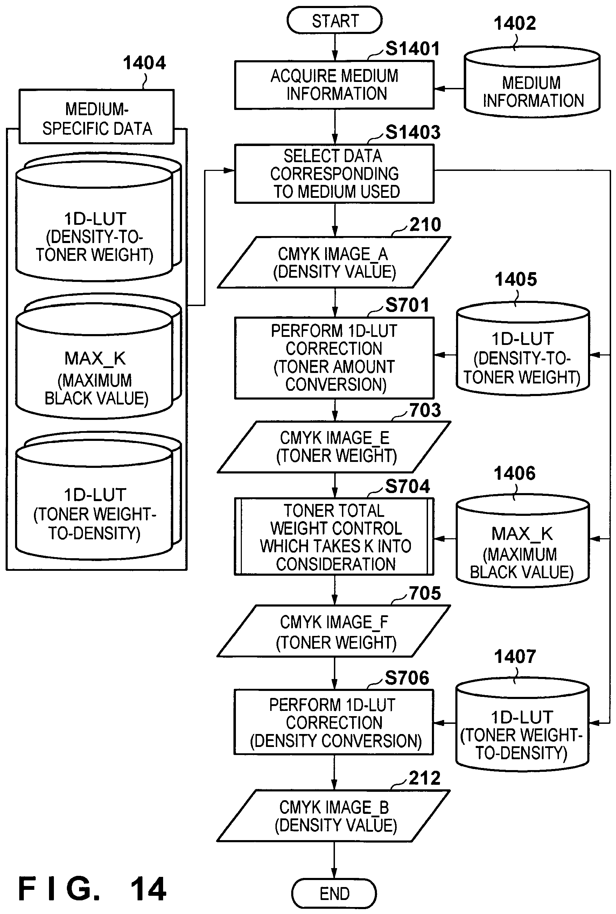

Fig. 14 is a flowchart showing the processing procedure in this embodiment. In performing toner total weight control, first, in step S1401, an image processing unit 114 acquires medium information 1402. In step S1403, the image processing unit 114 selects data corresponding to the medium used from medium-specific data 1404. The medium-specific data 1404 is data obtained by collecting 1D-LUTs (density-to-toner weight), MAX_K (maximum black value), and 1D-LUTs (toner weight-to-density) for each medium.

The medium-specific data 1404 is generated using toner weight information 808 prepared for each medium. A generation method is the same as that in the processing shown in Fig. 8, and a description thereof will not be given. A 1D-LUT (density-to-toner weight) 1405, MAX_K (maximum black value) 1406, and a 1D-LUT (toner weight-to-density) 1407 corresponding to the medium used are selected in step S1403. The processes in steps S701 to S706 of this embodiment are the same as those of the first embodiment, but data selected in accordance with the medium used is employed in the former.

Because the processing according to the first embodiment is employed in the third embodiment, a plurality of 1D-LUTs, etc. are provided, but the processing according to the second embodiment may be employed instead. In this case, pluralities of conversion coefficients such as MAX_K (maximum black value) 1102, toner weight conversion coefficients 1103, and toner weight inverse conversion coefficients 1104 are provided in place of a plurality of 1D-LUTs. Also, although medium-specific 1D-LUTs are prepared for all the colors in this embodiment, a plurality of 1D-LUTs may be prepared for only a specific color. Moreover, although the color material is limited to toner in this embodiment, any color material may be adopted. Again, although a 1D-LUT is used to convert the density value into the toner weight in this embodiment, conversion may be performed by an arithmetic operation defined by a specific equation. Similarly, although a 1D-LUT is used to convert the toner weight into the density value in this embodiment, conversion may be performed by an arithmetic operation defined by a specific equation. Again, although the difference in amount of a color material consumed for a density value of 100% among the individual colors is defined by the concept "toner weight" in this embodiment, any concept such as the "volume" may be employed as long as it can represent this difference.

According to this embodiment, the amount of a color material can precisely be limited even if the amount of a color material such as toner consumed for the same density value varies in each individual color. Also, even if the toner weight information varies in each individual medium, data corresponding to the medium used is selected, thereby making it possible to precisely limit the amount of a color material.

### <Fourth Embodiment>

An embodiment when estimated density-specific information is used in toner total weight control will be described next. Processing of reflecting toner weight information on a 1D-LUT and toner total weight control has been described in the first and second embodiments. A case in which the estimated density upon outputting data onto paper changes depending on, for example, the setting will be exemplified in the fourth embodiment.

A situation in which the maximum density of each color upon outputting data onto paper is to be changed in accordance with the setting may be encountered depending on the printer used. For example, the density is increased if the image quality is to be improved, and is decreased if the amount of toner consumed is to be saved. In this case, the amount of toner consumed for a density value of 100% in each color changes in accordance with the setting made by the user, so the relationship between the density value and the amount of toner changes. Therefore, it is necessary to prepare a plurality of data such as a plurality of 1D-LUTs in accordance with the density upon outputting data onto paper, and switching between these data in accordance with the corresponding setting.

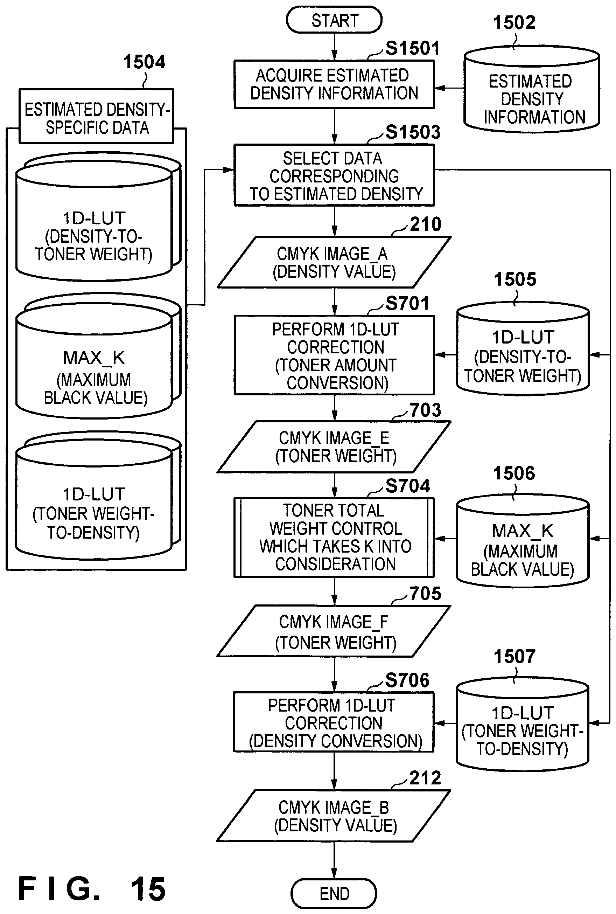

Fig. 15 is a flowchart showing the processing procedure in this embodiment. In performing toner total amount control, first, in step S1501, an image processing unit 114 acquires estimated density information 1502. The estimated density mentioned herein is obtained by estimating the density of an image obtained upon outputting data having a density value of 100% onto paper and measuring it. The user can perform setting associated with the estimated density using a display device 118 or an input device 120, and the estimated density changes in accordance with the user's setting value. In step S1503, the image processing unit 114 selects data corresponding to the estimated density from estimated density-specific data 1504. The estimated density-specific data 1504 is data obtained by collecting 1D-LUTs (density-to-toner weight), MAX_K (maximum black value), and 1D-LUTs (toner weight-to-density) for each estimated density. A 1D-LUT (density-to-toner weight) 1505, MAX_K (maximum black value) 1506, and a 1D-LUT (toner weight-to-density) 1507 corresponding to the estimated density are selected in step S1503. The processes in steps S701 to S706 of this embodiment are the same as those of the first embodiment, but data selected in accordance with the estimated density is employed in the former.

Because the processing according to the first embodiment is employed in the fourth embodiment, a plurality of 1D-LUTs, etc. are provided, but the processing according to the second embodiment may be employed instead. In this case, pluralities of conversion coefficients such as MAX_K (maximum black value) 1102, toner weight conversion coefficients 1103, and toner weight inverse conversion coefficients 1104 are provided in place of a plurality of 1D-LUTs. Also, although estimated density-specific 1D-LUTs are prepared for all the colors in this embodiment, a plurality of 1D-LUTs may be prepared for only a specific color. Moreover, although the color material is limited to toner in this embodiment, any color material may be adopted. Again, although a 1D-LUT is used to convert the density value into the toner weight in this embodiment, conversion may be performed by an arithmetic operation defined by a specific equation. Similarly, although a 1D-LUT is used to convert the toner weight into the density value in this embodiment, conversion may be performed by an arithmetic operation defined by a specific equation. Again, although the difference in amount of a color material consumed for a density value of 100% among the individual colors is defined by the concept "toner weight" in this embodiment, any concept such as the "volume" may be employed as long as it can represent this difference.

According to this embodiment, the amount of a color material can precisely be limited even if the amount of a color material such as toner consumed for the same density value varies in each individual color. Also, even if the toner weight information varies in each individual estimated density, data corresponding to the estimated density is selected, thereby making it possible to precisely limit the amount of a color material.

### <Other Embodiments>

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image processing apparatus (101) comprising:
conversion means (114) configured to convert density values in colors, wherein the density values form a pixel of image data (210) into color material amount values in respective colors (703, 1303);
comparison means (114) configured to compare a sum (SUM1) of the color material amount values (703, 1303) with a limit value (504); and
control means (114) configured to decrease, in a case where it is determined as a result of comparison by the comparison means (114) that the sum (SUM1) of the color material amount values (703, 1303) is larger than the limit value (504), at least one of the density values so that a sum of decreased color material amount values (705, 1106) becomes not more than the limit value (504)
**characterized**
**by** further comprising acquisition means for acquiring color material information (1202);
in the conversion means, a maximum value of a density value in each color of the density values, which corresponds to a density of 100% for a respective color component, is converted to a respective color material amount value,
wherein the respective color material amount value is different from each other in at least two of the colors.

2. The apparatus according to claim 1, wherein
the conversion means (114) is configured to convert density values which form the pixel of image data (210) into said color material amount values (703) using a color component-specific color material amount conversion LUT (702).

3. The apparatus according to claim 1, wherein
the conversion means (114) is configured
to convert density values which form the pixel of image data (210) into second color material amount values (1105) using a color component-specific color material amount conversion LUT (302), and
to obtain said color material amount values (1303) by performing arithmetic processing of the second color material amount values (1105).

4. The apparatus according to claim 2, further comprising: inverse conversion means configured to perform conversion processing of the decreased color material amount values (705) using a LUT (707) having characteristics inverse to the color component-specific color material amount conversion LUT (702).

5. The apparatus according to any one of claims 1 to 4, wherein the color components include a black component and said control means is configured to decrease the color material amount values (703, 1303) of each non-black color component using a maximum value (708) of the color material amount value of the black component.

6. The apparatus according to any one of claims 1 to 5, wherein the color material includes toner.

7. An image processing method executed by an image processing apparatus (101), comprising:
a conversion step of converting (S301, S701, S1302) density values in colors, wherein the density values form a pixel of image data (210), into color material amount values in respective colors (703, 1303);
a comparison step (S503) of comparing a sum (SUM1) of the color material amount values (703, 1303) with a limit value (504); and
a control step (S505, S507) of decreasing, in a case where it is determined as a result of comparison in the comparison step (S503) that the sum (SUM1) of the color material amount values (703, 1303) is larger than the limit value (504), at least one of the density values so that a sum of decreased color material amount values (705, 1106) becomes not more than the limit value (504);
**characterized by** further comprising acquiring color material information (1202),
in the conversion step, a maximum value of a density value in each color of the density values, which corresponds to a density of 100% for a respective color component, is converted to a respective color material amount value,
wherein the respective color material amount value is different from each other in at least two of the colors.

8. The method according to claim 7, wherein
density values which form the pixel of image data (210) are converted (S701) into said color material amount values (703) using a color component-specific color material amount conversion LUT (702) generated (S801-S805).

9. The method according to claim 7, wherein
density values which form the pixel of image data (210) are converted (S301) into second color material amount values (1105) using a color component-specific color material amount conversion LUT (302), and
said color material amount values (1303) are obtained by performing (S1302) arithmetic processing of the second color material amount values (1105).

10. A program with computer-executable instructions for causing, when loaded on a computer, the computer to execute the method according to any one of claims 7 to 9.

## Patentansprüche

1. Bildverarbeitungsvorrichtung (101), umfassend:
eine Umwandlungseinrichtung (114), die konfiguriert ist, Dichtewerte in Farben in Farbmaterialmengenwerte in entsprechenden Farben (703, 1303) umzuwandeln, wobei die Dichtewerte ein Pixel von Bilddaten (210) bilden,
eine Vergleichseinrichtung (114), die konfiguriert ist zum Vergleichen einer Summe (SUM1) der Farbmaterialmengenwerte (703, 1303) mit einem Grenzwert (504), und
eine Steuereinrichtung (114), die konfiguriert ist zum Verringern mindestens eines der Dichtewerte, sodass eine Summe von verringerten Farbmaterialmengenwerten (705, 1106) nicht größer als der Grenzwert (504) wird, falls als ein Vergleichsergebnis durch die Vergleichseinrichtung (114) festgestellt wird, dass die Summe (SUM1) der Farbmaterialmengenwerte (703, 1303) größer als der Grenzwert (504) ist;
**dadurch gekennzeichnet, dass**
die Bildverarbeitungsvorrichtung weiterhin eine Erfassungseinrichtung zum Erfassen von Farbmaterialinformationen (1202) umfasst, und
in der Umwandlungseinrichtung ein Maximalwert eines Dichtewerts in einer jeweiligen Farbe der Dichtewerte, der einer Dichte von 100 % für eine entsprechende Farbkomponente entspricht, in einen entsprechenden Farbmaterialmengenwert umgewandelt wird,
wobei die entsprechenden Farbmaterialmengenwerte in mindestens zwei der Farben voneinander verschieden sind.

2. Vorrichtung nach Anspruch 1, wobei
die Umwandlungseinrichtung (114) konfiguriert ist, Dichtewerte, die die Pixel von Bilddaten (210) bilden, unter Verwendung einer farbkomponentenspezifischen Farbmaterialmengenumwandlungs-LUT (702) in die Farbmaterialmengenwerte (703) umzuwandeln.

3. Vorrichtung nach Anspruch 1, wobei
die Umwandlungseinrichtung (114) konfiguriert ist,
Dichtewerte, die die Pixel von Bilddaten (210) bilden, unter Verwendung einer farbkomponentenspezifischen Farbmaterialmengenumwandlungs-LUT (302) in zweite Farbmaterialmengenwerte (1105) umzuwandeln, und
die Farbmaterialmengenwerte (1303) durch Durchführen einer arithmetischen Verarbeitung der zweiten Farbmaterialmengenwerte (1105) zu erhalten.

4. Vorrichtung nach Anspruch 2, ferner umfassend: eine Umkehrumwandlungseinrichtung, die konfiguriert ist, eine Umwandlungsverarbeitung der verringerten Farbmaterialmengenwerte (705) unter Verwendung einer LUT (707) durchzuführen, die umgekehrte Eigenschaften wie die farbkomponentenspezifischen Farbmaterialmengenumwandlungs-LUT (702) aufweist.

5. Vorrichtung nach einem der Ansprüche 1 bis 4, wobei die Farbkomponenten eine schwarze Komponente umfassen und die Steuereinrichtung konfiguriert ist, die Farbmaterialmengenwerte (703, 1303) einer jeweiligen nicht schwarzen Farbkomponente unter Verwendung eines Maximalwerts (708) des Farbmaterialmengenwerts der schwarzen Komponente zu verringern.

6. Vorrichtung nach einem der Ansprüche 1 bis 5, wobei das Farbmaterial Toner enthält.

7. Bildverarbeitungsverfahren, das durch eine Bildverarbeitungsvorrichtung (101) ausgeführt wird, umfassend:
einen Umwandlungsschritt zum Umwandeln (S301, S701, S1302) von Dichtewerten in Farben in Farbmaterialmengenwerte in entsprechenden Farben (703, 1303), wobei die Dichtewerte ein Pixel von Bilddaten (210) bilden;
einen Vergleichsschritt (S503) zum Vergleichen einer Summe (SUM1) der Farbmaterialmengenwerte (703, 1303) mit einem Grenzwert (504); und
einen Steuerschritt (S505, S507) zum Verringern mindestens eines der Dichtewerte, sodass eine Summe der verringerten Farbmaterialmengenwerte (705, 1106) nicht größer als der Grenzwert (504) wird, falls im Vergleichsschritt (S503) als Ergebnis eines Vergleichs bestimmt wird, dass die Summe (SUM1) der Farbmaterialmengenwerte (703, 1303) größer als der Grenzwert (504) ist;
**dadurch gekennzeichnet, dass**
das Verfahren ferner ein Erfassen von Farbmaterialinformationen (1202) umfasst, und
im Umwandlungsschritt ein Maximalwert eines Dichtewerts in einer jeweiligen Farbe der Dichtewerte, der einer Dichte von 100 % für eine entsprechende Farbkomponente entspricht, in einen entsprechenden Farbmaterialmengenwert umgewandelt wird,
wobei die entsprechenden Farbmaterialmengenwerte in mindestens zwei der Farben voneinander verschieden sind.

8. Verfahren nach Anspruch 7, wobei
Dichtewerte, die die Pixel von Bilddaten (210) bilden, unter Verwendung einer Farbkomponenten-spezifischen erzeugten (S801 - S805) Farbmaterialmengenumwandlungs-LUT (702) in die Farbmaterialmengenwerte (703) umgewandelt werden (S701).

9. Verfahren nach Anspruch 7, wobei
Dichtewerte, die die Pixel von Bilddaten (210) bilden, unter Verwendung einer Farbkomponenten-spezifischen Farbmaterialmengenumwandlungs-LUT (302) in zweite Farbmaterialmengenwerte (1105) umgewandelt werden (S301), und
die Farbmaterialmengenwerte (1303) durch Durchführen (S1302) einer arithmetischen Verarbeitung der zweiten Farbmaterialmengenwerte (1105) erhalten werden.

10. Programm mit computerausführbaren Befehlen, die bei Laden auf einen Computer den Computer veranlassen, das Verfahren nach einem der Ansprüche 7 bis 9 auszuführen.

## Revendications

1. Appareil de traitement d'images (101) comprenant :
un moyen de conversion (114) configuré pour convertir des valeurs de densité en couleurs, les valeurs de densité formant un pixel de données d'image (210), en valeurs de quantité de matière colorée dans des couleurs respectives (703, 1303) ;
un moyen de comparaison (114) configuré pour comparer une somme (SUM1) des valeurs de quantité de matière colorée (703, 1303) à une valeur limite (504) ; et
un moyen de commande (114) configuré pour réduire, dans un cas où il est déterminé comme résultat d'une comparaison effectuée par le moyen de comparaison (114) que la somme (SUM1) des valeurs de quantité de matière colorée (703, 1303) est supérieure à la valeur limite (504), au moins l'une des valeurs de densité de façon qu'une somme de valeurs de quantité de matière colorée réduites (705, 1106) devienne non supérieure à la valeur limite (504),
**caractérisé**
**en ce qu'**il comprend en outre un moyen d'acquisition destiné à acquérir des informations de matière colorée (1202) ;
**en ce que**, dans le moyen de conversion, une valeur maximale d'une valeur de densité dans chaque couleur des valeurs de densité, qui correspond à une densité de 100 % pour une composante de couleur respective, est convertie en une valeur de quantité de matière colorée respective,
dans lequel les valeurs respectives de la quantité de matière colorée sont différentes les unes des autres dans au moins deux des couleurs.

2. Appareil selon la revendication 1, dans lequel
le moyen de conversion (114) est configuré pour convertir des valeurs de densité qui forment le pixel de données d'image (210) en lesdites valeurs de quantité de matière colorée (703) au moyen d'une LUT (702) de conversion de quantité de matière colorée spécifique à la composante de couleur.

3. Appareil selon la revendication 1, dans lequel
le moyen de conversion (114) est configuré
pour convertir des valeurs de densité qui forment le pixel de données d'image (210) en secondes valeurs de quantité de matière colorée (1105) au moyen d'une LUT (302) de conversion de quantité de matière colorée spécifique à la composante de couleur, et
pour obtenir lesdites valeurs de quantité de matière colorée (1303) en effectuant un traitement arithmétique des secondes valeurs de quantité de matière colorée (1105).

4. Appareil selon la revendication 2, comprenant en outre : un moyen de conversion inverse configuré pour effectuer un traitement de conversion des valeurs de quantité de matière colorée réduites (705) au moyen d'une LUT (707) ayant des caractéristiques inverses de celles de la LUT (702) de conversion de quantité de matière colorée spécifique à la composante de couleur.

5. Appareil selon l'une quelconque des revendications 1 à 4, dans lequel les composantes de couleur comprennent une composante- noire et ledit moyen de commande est configuré pour réduire les valeurs de quantité de matière colorée (703, 1303) de chaque composante de couleur non noire au moyen d'une valeur maximale (708) de la valeur de quantité de matière colorée de la composante noire.

6. Appareil selon l'une quelconque des revendications 1 à 5, dans lequel la matière colorée comprend un toner.

7. Procédé de traitement d'image exécuté par un appareil (101) de traitement d'images, comprenant :
une étape de conversion consistant à convertir (S301, S701, 1302) des valeurs de densité en couleurs, les valeurs de densité formant un pixel de données d'image (210), en valeurs de quantité de matière dans les couleurs respectives (703, 1303) ;
une étape de comparaison (S503) consistant à comparer une somme (SUM1) des valeurs de quantité de matière colorée (703, 1303) à une valeur limite (504) ; et
une étape de commande (S505, S507) consistant à réduire, dans le cas où il est déterminé comme résultat d'une comparaison effectuée lors de l'étape de comparaison (S503) que la somme (SUM1) des valeurs de quantité de matière colorée (703, 1303) est supérieure à la valeur limite (504), au moins l'une des valeurs de densité de façon qu'une somme de valeurs de quantité de matière colorée réduites (705, 1106) devienne non supérieure à la valeur limite (504) ;
**caractérisé en ce qu'**il comprend en outre l'acquisition d'informations de matière colorée (1202),
lors de l'étape de conversion, une valeur maximale d'une valeur de densité dans chaque couleur des valeurs de densité, qui correspond à une densité de 100 % pour une composante de couleur respective, est convertie en une valeur de quantité de matière colorée respective,
dans lequel les valeurs respectives de la quantité de matière colorée sont différentes les unes des autres dans au moins deux des couleurs.

8. Procédé selon la revendication 7, dans lequel
les valeurs de densité qui forment le pixel des données d'image (210) sont converties (S701) en lesdites valeurs de quantité de matière colorée (703) au moyen d'une LUT (702) de conversion de quantité de matière colorée spécifique à la composante de couleur générée (S801 - S805).

9. Procédé selon la revendication 7, dans lequel
les valeurs de densité qui forment le pixel de données d'image (210) sont converties (S301) en secondes valeurs de quantité de matière colorée (1105) au moyen d'une LUT (302) de conversion de quantité de matière colorée spécifique à la composante de couleur, et
lesdites valeurs de quantité de matière colorée (1303) sont obtenues en effectuant (S1302) un traitement arithmétique des secondes valeurs de quantité de matière colorée (1105).

10. Programme comportant des instructions exécutables par ordinateur destiné, lorsqu'il est chargé sur un ordinateur, à amener l'ordinateur à mettre en œuvre le procédé selon l'une des revendications 7 à 9.
